# EUROPEAN PATENT APPLICATION

(11) **EP 1 630 551 A1**
(43) Date of publication of application: **01.03.2006**
(21) Application number: 05017432.5
(22) Date of filing: 10.08.2005
(51) Int. Cl.: G01N 29/04, G01N 29/22, G01N 29/32

(54) **Substrate crack acoustic inspection apparatus and method**

(30) Priority: 25.08.2004 JP 2004245536; 24.09.2004 JP 2004277303
(71) Applicant: SHARP KABUSHIKI KAISHA, Osaka-shi, Osaka 545-8522 (JP)
(72) Inventor: Yagi, Katsuyuki, Nara-shi Nara, 630-8537 (JP)
(74) Representative: Müller - Hoffmann & Partner

(57) **Abstract**

The present invention aims to provide a substrate crack inspection apparatus comprising: a striking portion for producing a sound by providing a vibration to a substrate; a first microphone for capturing the sound produced by the striking portion; an acoustic analysis portion for carrying out an acoustic analysis of the sound captured by the first microphone to determine a first power spectrum and judging whether or not a substrate crack exists based on a spectral intensity of a predetermined frequency region; and eliminating means for an eliminating the effect of external noise on the produced sound.

## Description

### BACKGROUND OF THE INVENTION

### 1. Field of the Invention

The present invention relates to a substrate crack inspection apparatus and a substrate crack inspecting method. More particularly, the present invention relates to an apparatus and a method that permit highly reliable substrate crack inspection even under the presence of external noise.

### 2. Description of Related Art

As a conventional method for detecting a microcrack, known is a method of previously applying to a substrate a stress substantially the same as a stress that the substrate receives at the time of a predetermined processing, adding another shock to the substrate, and detecting whether or not damage exists based on a produced sound (see Japanese Unexamined Patent Publication No. 2002-343989, for example).

In an apparatus disclosed as a technique for detecting a microcrack in a wafer, whether or not a defect exists is judged by inserting the wafer into a holding device attached to an axis with the use of a bearing, operating an oscillator on the principle of a pendulum to shake the wafer, capturing a sound produced at the time of shaking, and outputting a composite wave that has been subjected to a filter (see Japanese Unexamined Patent Publication No. 2001-235452, for example.)

In a process of manufacturing a solar cell, there are a plurality of steps of processing a thin-plate silicon wafer. In processing the silicon wafer in each step, a defect will be caused. The defect may be aggravated in a later step to finally lead to in some cases a failure and in other cases a remarkably reduction in mechanical strength. In the case of wafer failure or the like, troubles in facilities or a decrease in operating rate in the manufacturing steps may be resulted, while in the case of a remarkable reduction in mechanical strength, a decrease in electric power generation capability may be resulted.

In the prior art disclosed in this publication, since an apparatus for applying a stress to the substrate is necessary, the manufacturing equipment is complicated, and there exists a problem that production efficiency declines.

Also, in the apparatus disclosed in Japanese Unexamined Patent Publication No. 2001-235452, the wafer is not to be disposed parallel to the ground but it needs to be hung. Therefore, there are many spacial and mechanical restrictions in using this apparatus in the present production process. Further, due to the effect of ambient sounds or the like, highly accurate judgment about the presence or absence of a defect was not able to be made. In conventional manufacturing processes, in general, the wafer is transferred parallel to the ground. Therefore, disposing the wafer vertically to the ground in detecting a defect in a conventional manufacturing process makes a transfer mechanism complicated and increases a load to be applied to the wafer. Also, in almost all actual manufacturing locations, there are unexpected and regular noises having various frequencies. Therefore, when a high-pitched tone with the same frequency as that of a vibration sound representing a defect at the time of shaking comes out, it is difficult to judge whether it is a vibration sound or a noise even though the sound is passed through a filter since the effect of the filter is nullified depending on the condition of the noise. Thus, the apparatus has a problem in judgment accuracy.

### SUMMARY OF THE INVENTION

The present invention has been made in view of such circumstances and provides an apparatus and a method that permit highly reliable substrate crack inspection even under the presence of external noise.

The substrate crack inspection apparatus according to the present invention comprises a striking portion for producing a sound by providing a vibration to a substrate; a first microphone for capturing the sound produced by the striking portion; an acoustic analysis portion for carrying out an acoustic analysis of the sound captured by the first microphone to determine a first power spectrum and judging whether or not a substrate crack exists based on a spectral intensity of a predetermined frequency region; and an eliminating means for eliminating the effect of external noise on the produced sound.

The present inventor has found that the effect of external noise on the produced sound can be eliminated from two aspects to be mentioned below, and has achieved the present invention. In the present specification, when it is mentioned that the effect of external noise is "eliminated", it also covers elimination of part of the effect.

In a first aspect of the present invention, the eliminating means is a cover for covering the first microphone and having an opening facing the substrate. In this case, since the first microphone is covered with the cover having the opening facing the substrate, the first microphone is insulated from external noise by the covering, and thus the effect of external noise is eliminated.

In a second aspect of the present invention, the eliminating means includes a second microphone for capturing external noise, and causes the acoustic analysis portion to carry out an acoustic analysis of external noise captured by the second microphone to determine a second power spectrum and judge whether or not a substrate crack exists based on a difference between a spectral intensity of the first power spectrum and a spectral intensity of the second power spectrum in the predetermined frequency region. Or, the eliminating means may cause the acoustic analysis portion to carry out an acoustic analysis of external noise captured by the second microphone to determine a second power spectrum and judge whether or not the inspection is reliable based on a spectral intensity of the second power spectrum in the predetermined frequency region.

In the second aspect of the present invention, an acoustic analysis of external noise captured by the second microphone is carried out and the result is utilized to eliminate the effect of the external noise.

In both the first aspect and the second aspect of the present invention, the substrate crack inspection apparatus has a simple structure, and can be easily introduced into a transfer step carried out by a belt conveyer method, a walking beam method, etc.

Also, the above apparatus can be suitably used in carrying out a substrate crack inspecting method to be described later.

### BRIEF DESCRIPTION OF THE DRAWINGS

Fig. 1 is a plan view showing an example of striking portions on a substrate according to a Second Embodiment in a first aspect of the present invention;
Fig. 2A is a cross sectional view showing a structure of a substrate crack inspection apparatus according to Example 1 in the first aspect of the present invention;
Fig. 2B is a perspective view showing in detail a structure of a resilient suction pad 7c and its neighborhood of Fig. 2A;
Fig. 3 is a graph showing the result obtained by using the substrate crack inspection apparatus according to Example 1 in the first aspect of the present invention;
Fig. 4 is a cross sectional view showing a structure of a substrate crack inspection apparatus according to Example 2 in the first aspect of the present invention;
Fig. 5A and Fig. 5B show a substrate crack inspection system according to Example 3 in the first aspect of the present invention (Fig. 5A is a plan view and Fig. 5B is a front view);
Fig. 6 shows a cross sectional view of a structure of a substrate crack inspection apparatus according to the Example 1 in a second aspect of the present invention;
Fig. 7 is a graph showing the result obtained by using the substrate crack inspection apparatus according to the Example 1 in the second aspect of the present invention (external noise level is low);
Fig. 8 is a graph showing the result obtained by using the substrate crack inspection apparatus according to the Example 1 in the second aspect of the present invention (external noise level is high);
Fig. 9 is a cross sectional view showing a structure of a substrate crack inspection apparatus according to Example 2 of in the second aspect of the present invention.

### DESCRIPTION OF THE PREFERRED EMBODIMENTS

### 1. First Aspect of the Invention

### 1-1. First Embodiment

A substrate crack inspection apparatus according to a first embodiment in the first aspect of the present invention comprises: a striking portion for producing a sound by providing a vibration to a substrate; a first microphone for capturing the sound produced by the striking portion; and an acoustic analysis portion for carrying out an acoustic analysis of the sound captured by the first microphone to determine a first power spectrum and judging whether or not a substrate crack exists based on a spectral intensity of a predetermined frequency region, the first microphone being covered with a cover having an opening facing the substrate.

The striking portion strikes the substrate by using a driving force by a motor or a hydraulic cylinder or a spring elastic force. The striking portion is preferably formed of a synthetic rubber whose Shore is approximately 40-60. As the acoustic analysis portion, an element having a program for carrying out, by use of a microcomputer, a Fourier transformation of a striking vibration sound and judging whether or not a substrate crack exists based on the obtained power spectrum can be used. For explanations of the remaining components, reference should be made to the below explanations for a substrate crack inspecting method.

The apparatus can be suitably used in carrying out the following substrate crack inspecting method.

A substrate crack inspecting method according to a first embodiment in the first aspect of the present invention comprises the steps of: (1) producing a sound by providing a vibration to a substrate; (2) capturing the produced sound by a first microphone and carrying out an acoustic analysis of the captured sound to determine a first power spectrum; and (3) judging whether or not a substrate crack exists based on a spectral intensity of a predetermined frequency region, the first microphone being covered with a cover having an opening facing the substrate.

### 1-1-1. The step of producing a sound by providing a vibration to a substrate

For the substrate, a semiconductor substrate (an elemental semiconductor substrate of Si, etc., a compound semiconductor substrate of GaAs, etc.), glass substrate, etc. can be used.

As a method for providing vibration to the substrate, a method for providing vibration to a substrate by, while supporting a predetermined position of the substrate, striking the substrate with an elastic member is preferably used. For the "elastic member," synthetic rubber, urethane rubber, silicone rubber, etc., can be used. In addition, the elastic member preferably has a front end of a nearly spherical curved surface shape. According to this method, occurrence of a new fracture due to striking the substrate can be prevented, and a collision sound produced at the time of striking can be reduced.

In addition, for the elastic member, a member with a Shore hardness of approximately 40-60 is preferably used. This is because extracting a characteristic sound tends to become difficult with a higher or lower hardness.

In addition, it is preferable to support a center part of the substrate and provide a vibration to a peripheral part of the substrate. In addition, the substrate is preferably supported by use of a vacuum suction pad. Furthermore, it is preferable to use one vacuum suction pad whose size has an area of approximately 5-10% of the wafer size. As the material of the suction pad, a synthetic rubber base whose Shore is approximately 40-60 is preferable. The substrate is preferably supported at one position. This is because outputting a characteristic sound at the time of striking becomes difficult if the substrate is held at a plurality of positions.

### 1-1-2. The step of capturing the produced sound by a first microphone and carrying out an acoustic analysis of the captured sound to determine a first power spectrum

The produced sound is captured by the first microphone. The first microphone is covered with a cover having an opening. The opening faces the substrate. In this case, the first microphone can selectively capture a sound from the direction where the substrate exists and thus can reduce the effect of external noise. Preferably, the cover is cylindrical and has an opening at one end. The size of the cover can be properly determined according to the size of the first microphone. Typically, the first microphone is fixed inside the cover. The cover can be made of various materials such as wood, plastic, metal (iron, stainless steel, etc), etc. Also, the cover has preferably a thickness not smaller than a certain degree (approximately 1 mm for example) in order to secure sound insulation.

Preferably, the cover has a contact area with the substrate at the opening.
In this case, since the opening is closed by the substrate, the effect of external noise can be further reduced. Also, preferably, the cover is resilient at the contact area with the substrate. In this case, the adhesion between the cover and the substrate can be enhanced, in addition that the risk of causing damage to the substrate can be reduced. Specifically, for example, the cover has a resilient member at the contact area with the substrate. The resilient member is made of silicone rubber, nitrile rubber, butyl rubber or the like.

Also, preferably, the cover sucks and supports the substrate at the contact area with the substrate. In this case, the cover also serves as a substrate-supporting member so that the entire construction can be simplified. Specifically, for example, the cover includes a suction pad at the contact area with the substrate, the suction pad being connected to a vacuum (pressure reduction) pump. The suction pad may be circular or polygonal. Desirably, the size of the suction pad is such that (1) a wafer can be held with certainty and (2) a sway of the substrate caused by an impact of the resilient member against the substrate does not cause the substrate to contact with parts placed around the substrate. In the case where the resilient member at a sucking portion sucks the substrate and thereby contracts, a change in pressure inside the cover of the first microphone exerts an influence on a detector portion of the first microphone to disable normal detection. Therefore, it is desirable to increase the volume inside the cover of the first microphone to a maximum to reduce the influence of the change in pressure on the detector portion of the first microphone to a minimum.

The cover preferably supports the substrate from above or from below. For example, with the cover supporting the substrate from above, the vibration may be provided to the substrate from above. Or, with the cover supporting the substrate from below, the vibration may be provided to the substrate from above. In other words, the vibration to the substrate may be provided from the same side as the cover or from a side opposite the cover.

As the acoustic analysis, an FFT analysis, an octave analysis, etc., are included. "Determining a power spectrum" means determining, by carrying out a Fourier transformation for a sound captured by a microphone, a power spectrum of the sound. "The power spectrum" indicates spectral intensities of each sample frequency band.

### 1-1-3. The step of judging whether or not a substrate crack exists based on a spectral intensity of a predetermined frequency region

The substrate crack means a crazing, fissure, or chipping formed inside or on the surface of a substrate, etc. The predetermined frequency region means a frequency region where a difference is produced in the spectral intensities depending on the presence and absence of a substrate crack. Accordingly, by previously defining this frequency region by an experiment, etc., and estimating a spectral intensity of the frequency region, whether or not a substrate crack exists is judged.

The inventor has discovered that the spectral intensity increases at a high-frequency region of 7KHz or more. Thereby, it becomes possible to judge whether or not a substrate crack exists based on the spectral intensity of the high-frequency region of 7KHz or more.

In addition, it is preferable to judge whether or not a substrate crack exists based on a spectral intensity of an audible frequency region of 10KHz or more and 20KHz or less. If the spectral intensity of this region is used, a commercially available reasonably priced microphone can be used, whereby the apparatus cost can be reduced.

### 1-2. Second Embodiment

A substrate crack inspection apparatus according to a second embodiment in the first aspect of the present invention comprises: a plurality of striking portions each for producing a sound by providing a vibration to a substrate; a first microphone for capturing the sounds produced by the striking portions; and an acoustic analysis portion for carrying out an acoustic analysis of the sounds captured by the first microphone to determine a plurality of first power spectra, statistically analyzing spectral intensities of a predetermined frequency region for the plurality of obtained first power spectra and judging whether or not a substrate crack exists based on the result of the statistic analysis, the first microphone being covered with a cover having an opening facing the substrate.

The substrate crack inspection apparatus according to the present embodiment comprises a plurality of striking portions. For explanations of the remaining components, reference should be made to the below explanations for a substrate crack inspecting method.

The apparatus can be suitably used in carrying out the following substrate crack inspecting method.

A substrate crack inspecting method according to a second embodiment in the first aspect of the present invention comprises the steps of (1) providing vibrations to a plurality of positions, respectively, on a substrate in order, and each time a vibration is provided, capturing by a first microphone a sound produced by the vibration and carrying out an acoustic analysis of the captured sound to determine a first power spectrum and (2) statistically analyzing spectral intensities of a predetermined frequency region for a plurality of obtained power spectra and judging whether or not a substrate crack exists based on the result of the statistic analysis, the first microphone being covered with a cover having an opening facing the substrate.

### 1-2-1. The step of providing vibrations to a plurality of positions, respectively, on a substrate in order, and each time a vibration is provided, capturing by a first microphone a sound produced by the vibration and carrying out an acoustic analysis of the captured sound to determine a first power spectrum

In the second embodiment, vibrations are provided to a plurality of positions, respectively, on a substrate, and each time a vibration is provided, a first power spectrum is determined. Thereby, first power spectra for the respective positions of the substrate are obtained.

If a vibration is provided for only one position, a substrate crack cannot sometimes be detected depending on the relationship between the position of the crack and position where vibration is provided. However, by providing vibrations to a plurality of positions, respectively, a substrate crack can be detected with accuracy irrespective of the relationship between the position of the crack and positions where vibrations are provided.

In addition, since each first power spectrum reflects the position and size of a substrate crack, by analyzing a plurality of first power spectra, information concerning the position and size of a substrate crack can be obtained with a higher accuracy, and this can be used for specifying the origin of a substrate crack.

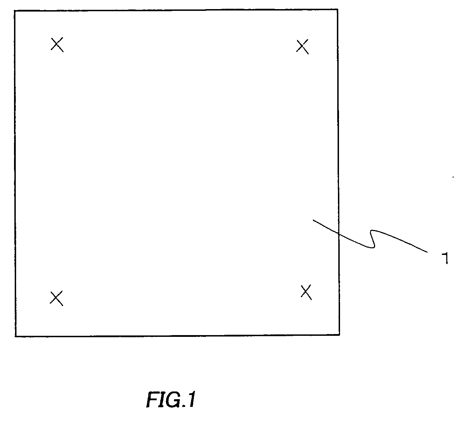

It is preferable that the positions where vibrations are provided are uniformly arranged in the periphery of the substrate. In addition, at this time, a center part of the substrate is preferably supported, preferably, by use of a vacuum suction pad. Concretely, for example, as shown by x marks in Fig. 1, vibrations can be provided to four corner points of a substrate 1.

### 1-2-2. The step of statistically analyzing spectral intensities of a predetermined frequency region for a plurality of obtained power spectra and judging whether or not a substrate crack exists based on the result of the statistic analysis

The statistical analysis means, for example, counting, out of a plurality of first power spectra, power spectrum (spectra) whose spectral intensity is a predetermined threshold value or more and judging whether or not a substrate crack exists based on the result.

Concretely, for example, first power spectra are determined for four points of the substrate, and if a spectral intensity of a predetermined frequency region is a threshold value or more even at one point thereof, it can be judged that a substrate crack exists, and in addition, in consideration of a detection error, etc., owing to various factors, for example, if a spectral intensity of a predetermined frequency region is a threshold value or more at two points or more, it can be judged that a substrate crack exists. Moreover, by comparing spectral intensities of a predetermined frequency region of respective first power spectra with each other and comprehensively judging the result thereof, whether or not a substrate crack exists may be judged. In any case, by carrying out a statistical analysis of a plurality of first power spectra, whether or not a substrate crack exists can be judged more accurately than in a case where one power spectrum is used.

In regard to the second embodiment, other matters are common to those of the first embodiment, and the description of the first embodiment applies thereto.

### 2. Second Aspect of the Invention

A substrate crack inspection apparatus in the second aspect of the present invention comprises: a striking portion for producing a sound by providing a vibration to a substrate; a first microphone for capturing the sound produced by the striking portion; and a second microphone for capturing external noise; and an acoustic analysis portion for carrying out an acoustic analysis of the sound captured by the first microphone and of the external noise captured by the second microphone to determine a first power spectrum and a second power spectrum respectively corresponding to the sound and the external noise and judging whether or not a substrate crack exists based on a difference between a spectral intensity of the first power spectrum and a spectral intensity of the second power spectrum in a predetermined frequency region.

The striking portion strikes the substrate by using a driving force by a motor or a hydraulic cylinder or a spring elastic force. The striking portion is preferably formed of a synthetic rubber whose Shore is approximately 40-60. The second microphone may be constructed to capture external noise simultaneously with the first microphone capturing the produced sound. As the acoustic analysis portion, an element having a program for carrying out, by use of a microcomputer, a Fourier transformation of a striking vibration sound and judging whether or not a substrate crack exists based on the obtained power spectrum can be used. Also, the acoustic analysis portion may judge whether or not the inspection is reliable based on the spectral intensity of the second power spectrum in the predetermined frequency region. In this case, the acoustic analysis portion does not necessarily need to judge whether or not a substrate crack exists based on the difference between the spectral intensity of the first power spectrum and the spectral intensity of the second power spectrum, but may judge whether or not a substrate crack exists based on the spectral intensity of the first power spectrum. Also, the acoustic analysis portion may carry out the inspection again if it judges that the reliability of the inspection is low. For explanations of the remaining components, reference should be made to the below explanations for a substrate crack inspecting method.

The apparatus is suitably used in carrying out the following substrate crack inspecting method.

A substrate crack inspecting method in the second aspect of the present invention comprises the steps of: (1) producing a sound by providing a vibration to a substrate; (2) capturing external noise by a second microphone simultaneously with capturing the produced sound by a first microphone; (3) carrying out an acoustic analysis of the sound captured by the first microphone and of the external noise captured by the second microphone to determine a first power spectrum and a second power spectrum respectively corresponding to the sound and the external noise; and (4) judging whether or not a substrate crack exists based on a difference between a spectral intensity of the first power spectrum and a spectral intensity of the second power spectrum in a predetermined frequency region.

### 2-1. The step of producing a sound by providing a vibration to a substrate

For the substrate, a semiconductor substrate (an elemental semiconductor substrate of S, etc., a compound semiconductor substrate of GaAs, etc.), glass substrate, etc. can be used.

As a method for providing a vibration to the substrate, a method for providing vibration to a substrate by, while supporting a predetermined position of the substrate, striking the substrate with an elastic member is preferably used. For the "elastic member," synthetic rubber, urethane rubber, silicone rubber, etc., can be used. In addition, the elastic member preferably has a front end of a nearly spherical curved surface shape. According to this method, occurrence of a new fracture due to striking the substrate can be prevented, and a collision sound produced at the time of striking can be reduced.

In addition, for the elastic member, a member with a Shore hardness of approximately 40-60 is preferably used. This is because extracting a characteristic sound tends to become difficult with a higher or lower hardness.

In addition, it is preferable to support a center part of the substrate and provide a vibration to a peripheral part of the substrate. In addition, the substrate is preferably supported by use of a vacuum suction pad. Furthermore, it is preferable to use one vacuum suction pad whose size has an area of approximately 5-10% of the wafer size. As the material of the suction pad, a synthetic rubber base whose Shore is approximately 40-60 is preferable. The substrate is preferably supported at one position. This is because outputting a characteristic sound at the time of striking becomes difficult if the substrate is held at a plurality of positions.

### 2-2. The step of capturing external noise by a second microphone simultaneously with capturing the produced sound by a first microphone

Preferably, the first microphone is not in contact with the substrate and is provided directly above or directly below the substrate in the vicinity thereof in order for the produced sound from the substrate to be effectively captured. The first microphone can preferably capture a sound having a frequency of 1K-100 KHz. In this case, the produced sound from the substrate can be captured in a wide frequency range, and substrate crack detection through the acoustic analysis in the later step is facilitated. The first microphone typically captures external noise as well, so that the acoustic analysis is carried out on a sound in which the produced sound from the substrate and external noise overlap one another.

The second microphone is used for monitoring external noise. Therefore, the second microphone is preferably constructed or arranged to capture substantially only external noise (substantially not to capture the produced sound from the substrate). Specifically, for example, a shielding member can be provided between the substrate and the second microphone in order for the produced sound from the substrate substantially not to be captured. The shielding member is of the shape of, for example, a plate and can be formed of metal, plastic, ceramic, etc. Or, the second microphone may be spaced apart from the substrate in order for the produced sound from the substrate substantially not to be captured. In addition, typically, the striking sound from the substrate hardly propagates in a direction parallel to a main surface of the substrate and easily propagates in a direction perpendicular to the main surface of the substrate. Therefore, the second microphone is preferably spaced apart from the substrate in the direction parallel to the main surface of the substrate. Furthermore, preferably, the first microphone and the second microphone have substantially the same performance (specification/standard). This is because, in this case, the second microphone can more suitably carry out monitoring of external noise.

### 2-3. The step of carrying out an acoustic analysis of the sound captured by the first microphone and of the external noise captured by the second microphone to determine a first power spectrum and a second power spectrum respectively corresponding to the sound and the external noise

The first power spectrum to be determined herein is typically attributable mainly to both the produced sound from the substrate sound and external noise, while the second power spectrum is attributable mainly to the external noise.

As the acoustic analysis, an FFT analysis, an octave analysis, etc., are included. "Determining a power spectrum" means determining, by carrying out a Fourier transformation for a captured sound, a power spectrum of the sound. The "power spectrum" indicates spectral intensities of each sample frequency band.

### 2-4. The step of judging whether or not a substrate crack exists based on a difference between a spectral intensity of the first power spectrum and a spectral intensity of the second power spectrum in a predetermined frequency region

The substrate crack means a crazing, fissure, or chipping formed inside or on the surface of a substrate, etc.

The predetermined frequency region means a frequency region where a difference is produced in the spectral intensities depending on the presence and absence of a substrate crack. Accordingly, by previously defining this frequency region by an experiment, etc., and estimating a spectral intensity of the frequency region, whether or not a substrate crack exists is judged. The predetermined frequency region is a region of, for example, 16K-100 KHz. In this region, a difference in the spectral intensities depending on the presence and absence of a substrate crack is large.

In the present embodiment, whether or not a substrate crack exists is judged based on a difference between a spectral intensity of the first power spectrum and a spectral intensity of the second power spectrum. In this case, the effect of external noise can be reduced, so that substrate crack inspection can be carried out with high reliability even under the presence of external noise.

Also, whether or not the inspection is reliable may be judged based on a spectral intensity of the second power spectrum in the predetermined frequency region. This is because while the effect of external noise is reduced by the above function, the reliability of the inspection lessens if external noise is too large. In this case, by carrying out the inspection again from the step (1), the reliability of the inspection can be secured. When the reliability of the inspection is secured in this manner, the judgment of whether or not a substrate crack exists does not necessarily need to be made based on the difference between the spectral intensity of the first power spectrum and the spectral intensity of the second power spectrum but may be made based on the spectral intensity of the first power spectrum.

The explanations of the first aspect and those of second aspect can be also applied to the second and first aspect, respectively, unless they run counter to their spirits.

Also, the present invention provides a substrate crack inspection system comprising a plurality of substrate crack inspection apparatuses each as described above, the substrate crack inspection apparatuses simultaneously inspecting a plurality of substrates.

### 1-1. Example 1 in the First Aspect of the Invention

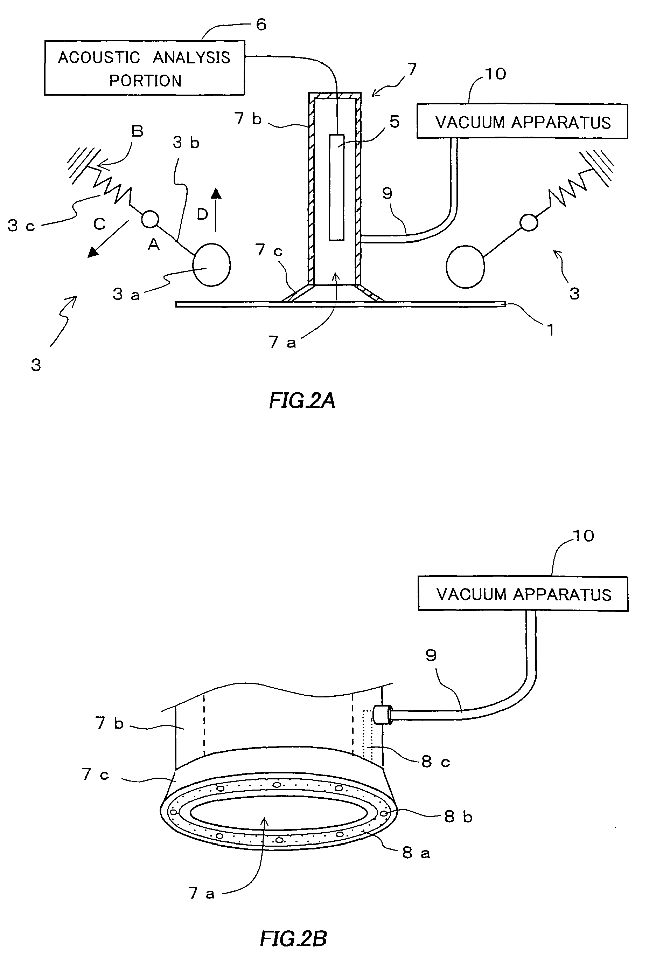

Fig. 2A is a cross sectional view showing a structure of a substrate crack inspection apparatus according to Example 1 in the first aspect of the present invention. The substrate crack inspection apparatus comprises striking portions 3 each for producing a sound by providing a vibration to a substrate 1; a first microphone 5 for capturing the sounds produced by the striking portions 3; and an acoustic analysis portion 6 electrically connected to the first microphone 5. The acoustic analysis portion 6 carries out an acoustic analysis of the sounds captured by the first microphone 5 to determine first power spectra and judges whether or not a substrate crack exists based on spectral intensities of a predetermined frequency region.

The first microphone 5 is covered with a cover 7 having an opening 7a, the opening 7a facing the substrate 1. The cover 7 includes a hollow cylindrical member (made of plastic with a thickness of 1 mm) and a resilient suction pad (made of silicone rubber) 7c arranged at its end. The resilient suction pad 7c is connected to a vacuum apparatus 10 via a cavity 8c provided in a side wall of the cover and via a vacuum cable 9. The cover 7 supports the substrate 1 from above via the resilient suction pad 7c.

Here, referring to Fig. 2B, there is explained the function of the resilient suction pad 7c to suck the substrate 1. Fig. 2B is a perspective view showing in detail a structure of the resilient suction pad 7c of Fig. 2A and its neighborhood. The resilient suction pad 7c has an annular groove 8a in its end face and further has a plurality of through holes 8b within the annular groove 8a. The plurality of through holes 8b are mutually connected inside the resilient suction pad 7c and further connected to the vacuum apparatus 10 via the cavity 8c provided in the side wall of the cover and via the vacuum cable 9 so that the vacuum apparatus 10 can reduce the pressure within the annular groove 8a. By bringing the end face of the resilient suction pad 7c into contact with the substrate 1 while the pressure is reduced within the annular groove 8a, the substrate 1 is sucked up onto the resilient suction pad 7c. The suction pad 7c of the present example is allowed to hold the substrate 1 by reducing the pressure within the through holes, while the interior of the cover 7 (i.e., the circumferential space around the first microphone 5) is kept substantially at atmospheric pressure. Herein, there may be only a single through hole within the annular groove 8a.

Each striking portion 3 includes a striking hammer 3a. The striking hammer 3a is connected to a striking hammer supporting bar 3b. The striking hammer supporting bar 3b is supported by a striking hammer supporting shaft A and a spring 3c. In addition, since the spring 3c is held by a fixing end B, the striking portion 3 is linearly held. In the condition supported by a spring force, by operating a spring-side part of the striking hammer supporting bar 3b in the direction of arrow C by means of a cam mechanism (unillustrated), the striking hammer supporting bar 3b is rotated around the striking hammer supporting shaft A and the striking hammer 3a is shifted in the direction of arrow D. Thereafter, when the cam mechanism releases the striking hammer supporting bar 3b, as a result of a restoring force of the spring 3c, the striking hammer 3a receives a force in the direction where the substrate 1 exists and strikes the substrate 1. The striking hammer 3a then carries out an oscillating movement with attenuation. A collision sound is produced at this time.

By use of this mechanism, whether or not a crack exists is judged by the following procedures. First, a vibration is provided to the substrate 1 by striking, from the same side as a plane suctioned by the cover 7, the substrate 1 at a strength for which a static load onto the substrate becomes approximately 80g. The striking hammer 3a is formed of a lump of synthetic rubber whose Shore is approximately 40-60and which has a nearly spherical curved surface shape.

A sound produced by striking is captured by use of the first microphone 5 having flat frequency characteristics at 20Hz-20KHz or 16K-100KHz. An octave analysis is carried out for the captured sound to determine a first power spectrum.

It is assumed that the substrate crack inspection apparatus of the present example is provided on a transfer line implemented by a belt conveyer or the like in a factory. In a factory, various noises occur. When the first microphone 5 captures such noises, a characteristic sound indicative of a substrate crack may possibly buried in the noises to make it difficult to detect the substrate crack. In the present invention, the first microphone 5 is covered with the cover 7 and therefore can capture only a vibration sound of the substrate 1 to permit substrate crack inspection with high reliability irrespective of external environment.

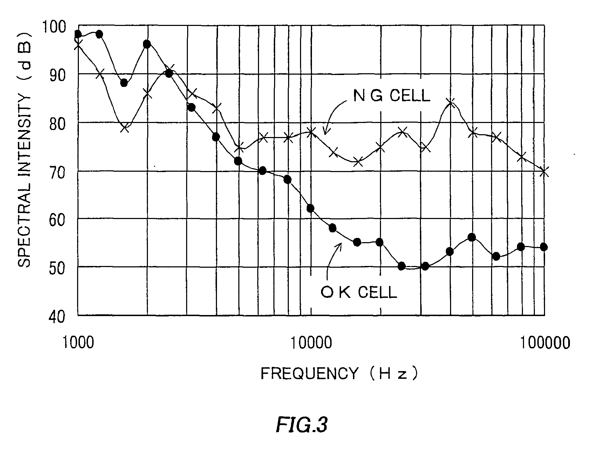

Fig. 3 shows the result obtained by using this apparatus. According to Fig. 3, in a low-frequency region, the difference in spectral intensity between a substrate with a crack (NG cell) and a substrate without a crack (OK cell) is small, while in a high-frequency region (region of approximately 7 KHz or more), the spectral intensity of the NG cell is much larger than that of the OK cell. Thus, the presence and absence of a substrate crack can be easily judged by measuring spectral intensities in the high-frequency region.

### 1-2. Example 2 in the First Aspect of the Invention

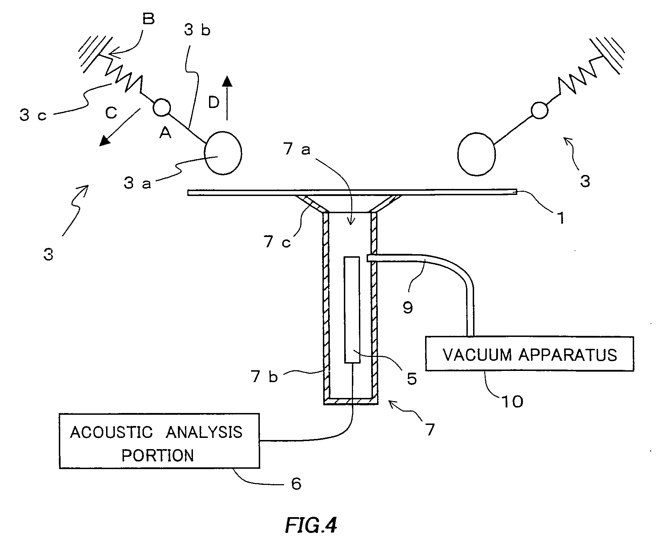

Fig. 4 is a cross sectional view showing a structure of a substrate crack inspection apparatus according to Example 2 in the first aspect of the present invention. The present example is the same in constitution as Example 1 above except that the cover 7 supports the substrate 1 from below. Even when the substrate 1 is supported from below as in the present example, a similar effect can obtained by a function similar to that obtained in Example 1 above.

### 1-3. Example 3 in the First Aspect of the Invention

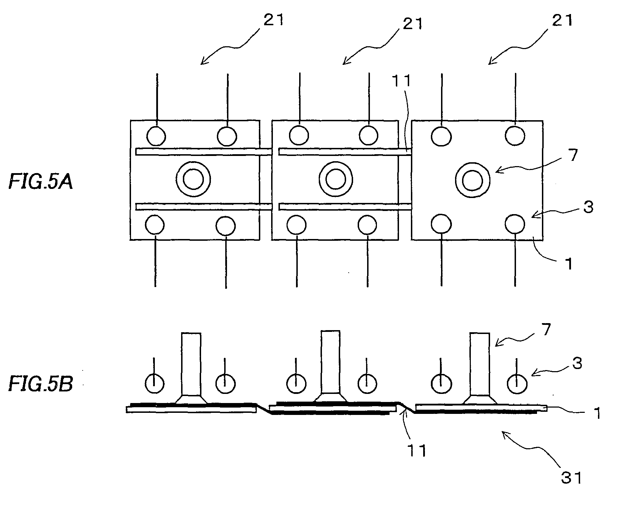

Fig. 5A and Fig. 5B show a substrate crack inspection system according to Example 3 in the first aspect of the present invention. Fig. 5A is a plan view and Fig. 5B is a front view. The substrate crack inspection system according to the present example comprises a plurality of substrate crack inspection apparatuses 21 each as described in Example 1 above. The plurality of substrate crack inspection apparatuses 21 simultaneously inspect a plurality of said substrates 1. Therefore, the substrate crack inspection system of the present example can be suitably used for detecting a crack in a connection body 31 in which the substrates 1 are connected together by a wire 11 in a so-called string state.

For particular operations, each substrate crack inspection apparatus 21 of the system according to the present example holds each substrate belonging to the substrate connection body 31, provides a vibration thereto and detects a crack. The operations of each substrate crack inspection apparatus 21 are as having been described in Example 1 above.

By using the system according to the present example, all the substrates that belong to the connection body 31 can be subjected to crack detection at once, so that the time required for inspecting the connection body 31 can be shorten.

### 2-1. Example 1 in the Second Aspect of the Invention

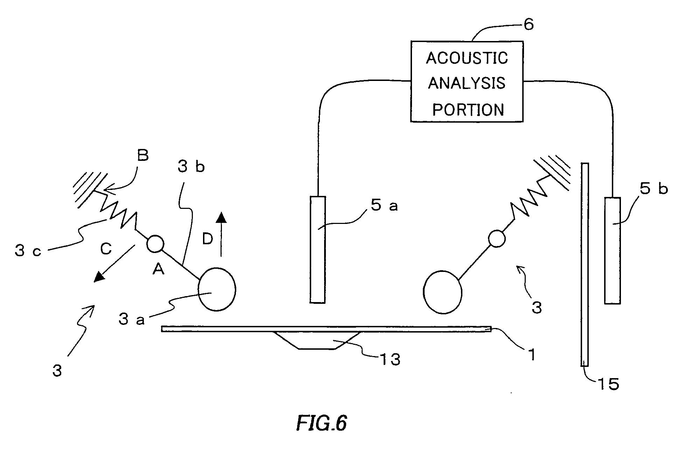

Fig. 6 shows a cross sectional view of a structure of a substrate crack inspection apparatus according to the Example 1 in the second aspect of the present invention. The substrate crack inspection apparatus comprises striking portions 3 each for producing a sound by providing a vibration to a substrate (wafer) 1; a first microphone 5a for capturing the sounds produced by the striking portions 3; a second microphone 5b for capturing external noise simultaneously with the first microphone 5a capturing the striking sound; and an acoustic analysis portion 6 electrically connected to the first microphone 5a and second microphone 5b. The acoustic analysis portion 6 carries out an acoustic analysis of each sound captured by the first microphone and of the external noise captured by the second microphone to determine a first power spectrum and a second power spectrum respectively corresponding to the sound and the external noise and thereby judge whether or not a substrate crack exists based on a difference between a spectral intensity of the first power spectrum and a spectral intensity of the second power spectrum of a predetermined frequency region. Also, the acoustic analysis portion 6 judges whether or not the substrate crack inspection is reliable based on the spectral intensity of the second power spectrum of the predetermined frequency region. The substrate 1 is held by a suction pad 13 connected to an unillustrated vacuum apparatus. A shielding plate 15 is provided between the substrate 1 and the second microphone 5b.

The striking portion 3 includes a striking hammer 3a. The striking hammer 3a is connected to a striking hammer supporting bar 3b. The striking hammer supporting bar 3b is supported by a striking hammer supporting shaft A and a spring 3c. In addition, since the spring 3c is held by a fixing end B, the substrate striking portion 3 is linearly held. In the condition supported by a spring force, by operating a spring-side part of the striking hammer supporting bar 3b in the direction of arrow C by means of a cam mechanism (unillustrated), the striking hammer supporting bar 3b is rotated around the striking hammer supporting shaft A and the striking hammer 3a is shifted in the direction of arrow D. Thereafter, when the cam mechanism releases the striking hammer supporting bar 3b, as a result of a restoring force of the spring 3c, the striking hammer 3a receives a force in the direction where the substrate 1 exists and strikes the substrate 1. The striking hammer 3a then carries out an oscillating movement with attenuation. A collision sound is produced at this time.

By use of this mechanism, whether or not a crack exists is judged by the following procedures. First, a vibration is provided for the substrate 1 by striking, from the same side as the first microphone 5a, the substrate 1 at a strength for which a static load onto the substrate 1 becomes approximately 80g. The striking hammer 3a is formed of a lump of synthetic rubber whose Shore is approximately 40-60 and which has a nearly spherical curved surface shape.

The sound produced by the striking is captured by use of the first microphone capable of collecting a sound having a frequency up to 100 KHz. Simultaneously with this, the second microphone 5b captures external noise. Next, the first power spectrum and second power spectrum respectively corresponding to the sound and the noise are determined to judge whether or not a substrate crack exists based on a difference between the first power spectrum and second power spectrum. Also, in the case where a spectral intensity of the second power spectrum in the predetermined frequency region exceeds a reference value, it is judged that the reliability of the substrate crack inspection is low, and the inspection is carried out again from the beginning.

It is assumed that the substrate crack inspection apparatus of the present example is provided on a transfer line implemented by a belt conveyer or the like in a factory. In a factory, various noises occur. When the first microphone 5 a captures such noises, a characteristic sound indicative of a substrate crack may possibly buried in the noises to make it difficult to detect the substrate crack. In the present invention, (1) whether or not a substrate crack exists is judged based on a difference between the first power spectrum and second power spectrum and (2) in the case where a spectral intensity of the second power spectrum in a predetermined frequency region exceeds a reference value, substrate crack inspection is carried out again to permit substrate crack inspection with high reliability irrespective of external environment.

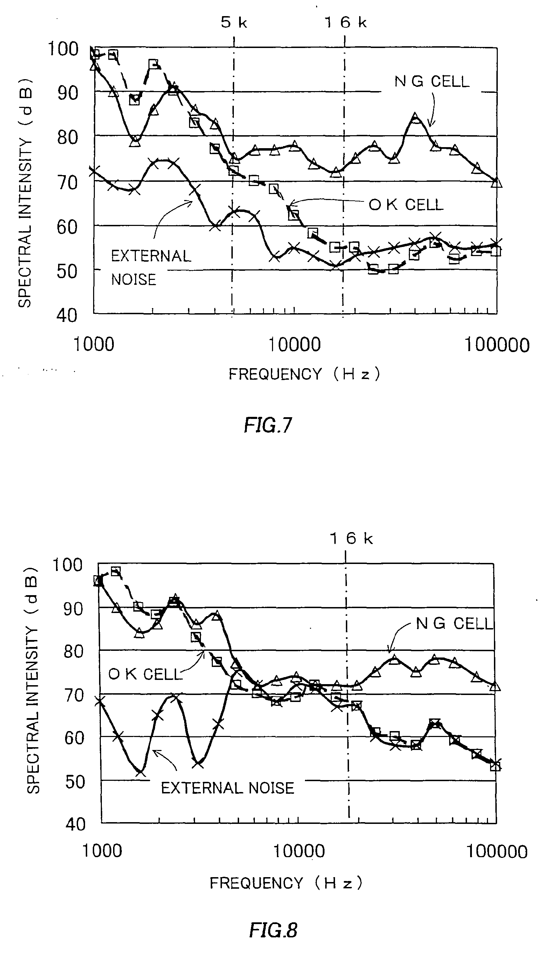

Next, Figs. 7 and 8 show the results obtained by using the apparatus. The result shown in Fig. 7 is that obtained when external noise level is relatively low, while the result shown in Fig. 8 is that obtained when external noise level is relatively high.

First, referring to Fig. 7, in a region with a frequency up to 5 KHz, the difference in spectral intensity between a produced sound from a substrate with a crack (NG cell) and external noise is substantially equal to the difference in spectral intensity between a produced sound from a substrate without a crack (OK cell) and external noise.

In a region with a frequency of 5-16 KHz, there is a slight gap between the two differences. Although the gap increases as the frequency approaches 16 KHz, the gap is not very large. In a region with a frequency of 16 KHz or more, the gap between the two is large. Therefore, it is found from Fig. 7 that the wafer crack inspection is preferably carried out in a high-frequency region of 16 KHz or more. The reason why the spectral intensity of the NG cell is high in the high-frequency region is considered to be that in the NG cell, friction between surfaces formed by a defect produces a friction sound having a high frequency.

Next, it is found that the spectral intensity of external noise in the region with a frequency of 16 KHz or more is higher in Fig. 8 than in Fig. 7. In Fig. 8, the spectral intensity of the OK cell is increased by the influence of external noise. As a result, there is a smaller difference in spectral intensity between the NG cell and the OK cell in Fig. 8 than in Fig. 7. This means a decrease in the reliability of the inspection. In the present example, whether or not a substrate crack exists is judged based on a difference in spectral intensity between either the NG cell or OK cell and external noise. Thus, the effect of external noise can be reduced, thereby enhancing the reliability of the inspection.

Furthermore, in order to further enhance the reliability, the substrate crack inspection can be carried out again if the spectral intensity of external noise exceeds, in a region with a frequency of, for example, 16 KHz or more, a reference value (for example, 60 dB). In Fig. 8, since the spectral intensity of external noise exceeds 60 dB at 50 KHz and in the neighborhood of 50 KHz, it is judged that the reliability of the substrate crack inspection is low and the inspection can be carried out again. Thus, the reliability of the substrate crack inspection can be further enhanced.

Herein, discussion is made on the position in which the first microphone 5a and second microphone 5b are provided. The distance between the first microphone 5a and the wafer 1 is determined so that a striking sound can be most effectively collected by taking into consideration the circumstances such as the degree of amplification, the magnitude of the striking sound and the magnitude of ambient noise. In general, the wafer 1 is so thin that it can be easily broken. Therefore, the force by which the wafer 1 is struck with the hammer 3 is set to a minimum to the extent that a striking sound can be heard. For this reason, the first microphone 5a is desirably arranged as close to the wafer 1 as possible. However, in the case where ambient sound level is low and the substrate is so strong that the sound pressure caused by striking the substrate with the hammer is too high, the first microphone 5a may be spaced apart from the wafer 1.

Also, desirably, the first microphone 5a is arranged in such a position that a vibration film with which the first microphone 5a receives a sound is parallel to the wafer 1 so that the first microphone 5a can be used in a position where it has optimum sensitivity. On the other hand, desirably, the second microphone 5b is arranged in a position different from the one in which the first microphone 5a is arranged so that the level of the striking sound of the wafer 1 is sufficiently lower at the second microphone 5b than at the first microphone 5a. For example, the second microphone 5b may be arranged horizontally to the wafer 1 (apart from the wafer 1 in direction parallel to a main surface of the wafer 1) and spaced apart to a certain extent from the wafer 1. By arranging the second microphone 5b horizontally to the wafer 1, it becomes difficult for a collision sound of the wafer 1 to directly enter the second microphone 5b. By spacing the second microphone 5b a longer distance apart from the wafer 1, it becomes further difficult. However, providing too large a distance brings the second microphone 5b to circumstances completely different from those under which the wafer 1 is struck, and thus it becomes meaningless to monitor the inspection circumstances. Therefore, it is necessary to keep a proper distance.

For the arrangement of the second microphone 5b, an obstacle may be provided between the wafer 1 and the second microphone 5b to reduce a sound pressure of a sound indicative of a substrate defect in a characteristic frequency region, contained in a striking sound of the wafer 1. The obstacle may be provided in such a position that a sound indicative of a substrate defect in a characteristic frequency region generated at the time when the substrate 1 is struck is blocked. In Example 1, the shielding plate 15 is provided between the substrate 1 and the second microphone 5b. In the present inspection, for the first microphone 5a and second microphone 5b, ones with the same specification are used for the following reason. If they are different in specification, for example, in obtainable frequencies, it is necessary to know the correlation between the first microphone 5a and the second microphone 5b, and, even if the correlation is found, it is necessary to take the correlation into consideration in carrying out judgment. In order to avoid such difficulty and labor, the first microphone 5a and second microphone 5b desirably have the same specification.

Also, for the first and second microphone 5a, 5b having been described above, microphones capable of capturing a sound having a frequency of 1 K-100 KHz are used. The use of such microphones is advantageous in the present invention because it can capture a wide region of characteristic sounds at the time when the wafer is struck, and thus can make judgment accurate.

### 2-2. Example 2 in the Second Aspect of the Invention

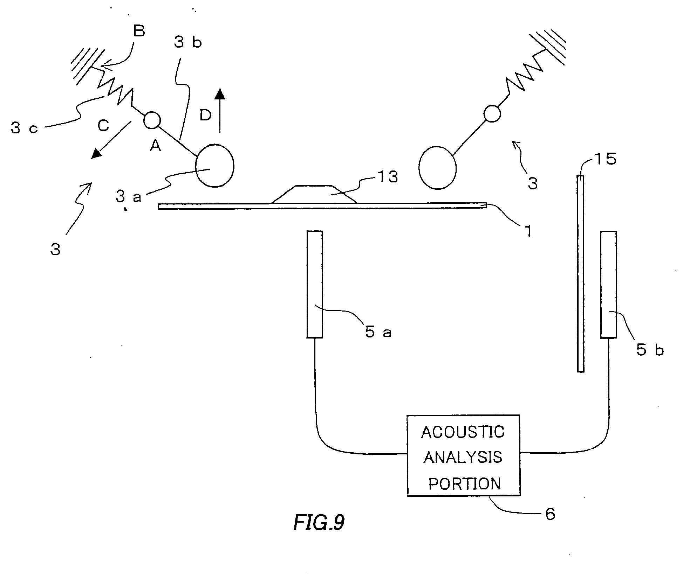

Fig. 9 is a cross sectional view showing a structure of a substrate crack inspection apparatus according to Example 2 in the second aspect of the present invention. In the present example, the first microphone 5a and second microphone 5b are arranged on a side of the apparatus opposite the striking portion 3 with respect to the substrate 1. Even with the first microphone 5a and second microphone 5b arranged in this manner, the same effect can be obtained by the same function as in Example 1 in the second aspect above.

## Claims

1. A substrate crack inspection apparatus comprising:
a striking portion for producing a sound by providing a vibration to a substrate;
a first microphone for capturing the sound produced by the striking portion; an acoustic analysis portion for carrying out an acoustic analysis of the sound captured by the first microphone to determine a first power spectrum and judging whether or not a substrate crack exists based on a spectral intensity of a predetermined frequency region; and
an eliminating means for eliminating the effect of external noise on the produced sound.

2. The apparatus of claim 1, wherein the eliminating means is a cover for covering the first microphone and having an opening facing the substrate.

3. The apparatus of claim 2, wherein the cover has a contact area with the substrate at the opening.

4. The apparatus of claim 3, wherein the cover is resilient at the contact area with the substrate.

5. The apparatus of claim 3, wherein the cover sucks and supports the substrate at the contact area with the substrate.

6. The apparatus of claim 5, wherein the cover supports the substrate from above or from below.

7. The apparatus of claim 2, wherein the predetermined frequency region is a high-frequency region of 7KHz or more.

8. The apparatus of claim 2, wherein the predetermined frequency region is an audible frequency region of 10KHz or more and 20KHz or less.

9. The apparatus of claim 2,
wherein the striking portion comprises a plurality of striking portions, the first microphone captures sounds produced by the striking portions, and
the acoustic analysis portion carries out an acoustic analysis of the sounds captured by the first microphone to determine a plurality of first power spectra, statistically analyzes spectral intensities of the predetermined frequency region for the plurality of obtained first power spectra and judges whether or not a substrate crack exists based on the result of the statistic analysis.

10. A substrate crack inspection system comprising a plurality of substrate crack inspection apparatuses each as set forth in claim 2, the substrate crack inspection apparatuses simultaneously inspecting a plurality of substrates.

11. The apparatus of claim 1, wherein the eliminating means includes a second
microphone for capturing external noise, and
causes the acoustic analysis portion to carry out an acoustic analysis of external noise captured by the second microphone to determine a second power spectrum and judge whether or not a substrate crack exists based on a difference between a spectral intensity of the first power spectrum and a spectral intensity of the second power spectrum in the predetermined frequency region.

12. The apparatus of claim 1, wherein the eliminating means includes a second microphone for capturing external noise, and
causes the acoustic analysis portion to carry out an acoustic analysis of external noise captured by the second microphone to determine a second power spectrum and judge whether or not the inspection is reliable based on a spectral intensity of the second power spectrum in the predetermined frequency region.

13. The apparatus of claim 11, further comprising a shielding member provided between the substrate and the second microphone.

14. The apparatus of claim 11, wherein the second microphone is spaced apart from the substrate.

15. The apparatus of claim 11, wherein the first microphone is provided directly above or directly below the substrate in the vicinity thereof.

16. The apparatus of claim 11, wherein the first microphone can capture a sound having a frequency up to 100 KHz.

17. The apparatus of claim 11, wherein the first microphone and second microphone have substantially the same performance.

18. A substrate crack inspecting method by using an apparatus as set forth in claim 2, the method comprising the steps of: (1) producing a sound by providing a vibration to a substrate; (2) capturing the produced sound by a first microphone and carrying out an acoustic analysis of the captured sound to determine a first power spectrum; and (3) judging whether or not a substrate crack exists based on a spectral intensity of a predetermined frequency region, the first microphone being covered with a cover having an opening facing the substrate.

19. A substrate crack inspecting method by using an apparatus as set forth in claim 9, the method comprises the steps of (1) providing vibrations to a plurality of positions, respectively, on a substrate in order, and each time a vibration is provided, capturing by a first microphone a sound produced by the vibration and carrying out an acoustic analysis of the captured sound to determine a first power spectrum and (2) statistically analyzing spectral intensities of a predetermined frequency region for a plurality of obtained power spectra and judging whether or not a substrate crack exists based on the result of the statistic analysis, the first microphone being covered with a cover having an opening facing the substrate.

20. A substrate crack inspecting method by using an apparatus as set forth in claim 11, the method comprising the steps of: (1) producing a sound by providing a vibration to a substrate; (2) capturing external noise by a second microphone simultaneously with capturing the produced sound by a first microphone; (3) carrying out an acoustic analysis of the sound captured by the first microphone and of the external noise captured by the second microphone to determine a first power spectrum and a second power spectrum respectively corresponding to the sound and the external noise; and (4) judging whether or not a substrate crack exists based on a difference between a spectral intensity of the first power spectrum and a spectral intensity of the second power spectrum in a predetermined frequency region.

21. A substrate crack inspecting method by using an apparatus as set forth in claim 12, the method comprising the steps of: (1) producing a sound by providing a vibration to a substrate; (2) capturing external noise by a second microphone simultaneously with capturing the produced sound by a first microphone; (3) carrying out an acoustic analysis of the sound captured by the first microphone and of the external noise captured by the second microphone to determine a first power spectrum and a second power spectrum respectively corresponding to the sound and the external noise; and (4) judging whether or not a substrate crack exists based on a spectral intensity of the first power spectrum in a predetermined frequency region and judging whether or not the inspection is reliable based on a spectral intensity of the second power spectrum in the predetermined frequency region.
